# EUROPEAN PATENT APPLICATION

(11) **EP 3 352 451 A1**
(43) Date of publication of application: **25.07.2018**
(21) Application number: 17154514.8
(22) Date of filing: 03.02.2017
(51) Int. Cl.: H04N 5/232, H04N 5/235

(54) **SINGLE CAMERA DYNAMIC IMAGING SYSTEMS AND METHODS OF CAPTURING DYNAMIC IMAGES**

(30) Priority: 18.01.2017 US 201715409158
(71) Applicant: Conway, Jerry L., Hoover, Al 35244 (US); Jiang, Ming, Alpharetta, GA 30022 (US)
(72) Inventor: Conway, Jerry L., Hoover, Al 35244 (US); Jiang, Ming, Alpharetta, GA 30022 (US)
(74) Representative: Weickmann & Weickmann PartmbB

(57) **Abstract**

Aspects of present disclosure relates to single camera dynamic imaging systems and methods of capturing dynamic images. The single camera dynamic imaging system includes a camera, and a dynamic imaging system. The camera includes a movable lens to capture image signal of a set of focused images of multiple objects within a visual scene. The multiple objects may be divided into one or more groups of objects, and each group includes one or more objects within a predetermined distance range. Each of the focused images is focused at a group of one or more objects through the movable lens. The camera includes a sensor to capture image signal of the set of focused images, and an image signal output to transmit the image signal to the dynamic imaging system. The dynamic imaging system receives, processes and stores the image signal of the set of focused images captured by the camera.

## Description

### FIELD

The present disclosure generally relates to dynamic image, and more particularly to single camera dynamic imaging system and methods of capturing dynamic images.

### BACKGROUND

Aperture and focusing distance are the two primary factors that determine how sharp a still picture will be on a camera's sensor. Larger apertures (smaller F-stop numbers) and closer focusing distances produce a shallower depth of field. For example, in portrait photography, a well taken picture may focus on the person so that the portrait of the person will appear very sharp and clear while other objects such as flowers, buildings, trees, etc. in front of and beyond the person appear soft and out of focus. In this case, the photographer takes advantage of the large aperture to emphasize the person, and deemphasize everything else. However, when taking a picture of a large gathering such as a concert, or a meeting where there are many people at different distances, the photographer is presented with a dilemma: where to place the focus of the picture. Although a smaller aperture can increase the depth of the field, it is impossible to take a picture with everything in focus. The photographer has to decide where to focus and then take the picture. Once the picture is taken, the depth of field in the picture is permanent and unalterable and the sharpness of anything outside the selected depth of field is forever lost. Therefore, all other elements in the photograph outside this depth of field will not be recorded in detail making it impossible for any other viewer of the photograph to see those afore mentioned portions of the picture in focus.

Therefore, heretofore unaddressed needs still exist in the art to address the aforementioned deficiencies and inadequacies.

### SUMMARY

In one aspect, the present disclosure relates to a single camera dynamic imaging system. In certain embodiments, the single camera dynamic imaging system includes a camera, and a dynamic imaging system. The camera includes a movable lens to capture image signal of a set of focused images of multiple objects within a visual scene. The multiple objects within the visual scene may be divided into one or more groups of objects, and each group includes one or more objects within a predetermined distance range. Each focused image is focused at a group of one or more objects through the movable lens. The camera includes a sensor to capture the image signal of the set of focused images, and an image signal output to transmit the image signal of the set of focused images captured from the sensor to the dynamic imaging system. The dynamic imaging system receives, processes and stores the image signal of the set of focused images captured by the camera.

In certain embodiments, a dynamic image captured by the single camera dynamic imaging system includes the set of focused images, and each focused image is associated with a corresponding focusing distance of the movable lens on each of the one or more groups of one or more objects.

In certain embodiments, the dynamic imaging system includes an image signal mixer, an image processing device, an image storage device, and a dynamic image display device. The image signal mixer receives the image signal of the set of focused images from the image signal output. The image processing device processes the image signal of the set of focused images received by the image signal mixer to form the dynamic image. The image storage device stores the dynamic image processed by the image processing device. The dynamic image display device displays the dynamic image.

In one embodiment, the dynamic image display device may include a gaze detection device which measures eye positions and eye movement of a viewer. When the viewer moves his/her eyes towards a group of one or more objects, the gaze detection device detects the viewer's eyes are aimed at the group of one or more objects, a focused image of the dynamic image corresponding to the group of one or more objects is dynamically and interactively displayed on the dynamic image display device. In another embodiment, the dynamic image display device may include a touch screen input device or a mouse pointing device. When the viewer touches a group of one or more objects on the screen, or uses the mouse to click the group of one or more objects on the screen, a focused image of the dynamic image corresponding to the group of one or more objects is dynamically and interactively displayed on the dynamic image display device.

In certain embodiments, the present disclosure relates to a dynamic video recording system having the single camera dynamic imaging system.

In another aspect, the present disclosure relates to a method of capturing a dynamic image using a single camera dynamic imaging system. In certain embodiments, the method includes: adjusting, by a movable lens of a camera of the single camera dynamic imaging system, focusing distances to multiple objects within a visual scene, and generating and capturing, by a sensor of the camera, image signal of a set of focused images of the multiple objects when each of the one or more groups of one or more objects is detected to be in focus through the movable lens. The multiple objects include one or more groups of objects. Each group includes one or more objects within a predetermined distance range. Each of the focusing distances of the camera focuses on a corresponding group of objects.

In certain embodiments, the method further includes: receiving, at an image signal mixer of a dynamic imaging system, the image signal of the set of focused images from the sensor through an image signal output, processing, by an image processing device of the dynamic imaging system, the image signal of the set of focused images received by the image signal mixer to form the dynamic image, and storing, by an image storage device of the dynamic imaging system, the dynamic image processed by the image processing device. The method may also include displaying the dynamic image on a dynamic image display device. In one embodiment, the dynamic image display device may include a gaze detection device which measures eye positions and eye movement of a viewer. When a viewer moves his/her eyes towards a group of one or more objects, the gaze detection device detects the viewer's eyes are aimed at the group of one or more objects, a focused image of the dynamic image corresponding to the group of one or more objects is dynamically and interactively displayed on the dynamic image display device. In another embodiment, the dynamic image display device may include a touch screen input device or a mouse pointing device. When the viewer touches a group of one or more objects on the screen, or uses the mouse to click the group of one or more objects on the screen, a focused image of the dynamic image corresponding to the group of one or more objects is dynamically and interactively displayed on the dynamic image display device.

In certain embodiments, the dynamic image captured by the single camera dynamic imaging system includes the set of focused images captured, processed and stored by the dynamic imaging system, and each of the focused images is associated with a corresponding focusing distance of the movable lens to each of the one or more groups of one or more objects.

These and other aspects of the present disclosure will become apparent from the following description of the preferred embodiment taken in conjunction with the following drawings and their captions, although variations and modifications therein may be affected without departing from the spirit and scope of the novel concepts of the disclosure.

### BRIEF DESCRIPTION OF THE DRAWINGS

The accompanying drawings illustrate one or more embodiments of the disclosure and, together with the written description, serve to explain the principles of the disclosure. Wherever possible, the same reference numbers are used throughout the drawings to refer to the same or like elements of an embodiment, and wherein:
FIG. 1 schematically shows a block diagram of a single camera dynamic imaging system according to certain embodiments of the present disclosure;
FIG. 2 illustrates an exemplary dynamic image capturing of an exemplary visual scene using the single camera dynamic imaging system according to certain embodiments of the present disclosure;
FIG. 3 illustrates the visual scene having multiple objects according to certain embodiments of the present disclosure;
FIG. 4 illustrates capturing a sequence of focused images of the objects at various focal distances according to certain embodiments of the present disclosure;
FIG. 5A illustrates a first focused image of a first group of objects located in a near focal distance, FIG. 5B illustrates a second focused image of a second group of objects located in a medium focal distance, FIG. 5C illustrates a third focused image of a third group of objects located in a far focal distance, and FIG. 5D illustrates a fourth focused image of a background of the visual scene according to one embodiment of the present disclosure; and
FIG. 6 is a flow chart illustrating a method of capturing dynamic images using the single camera dynamic imaging system according to certain embodiments of the present disclosure.

### DETAILED DESCRIPTION

The present disclosure is more particularly described in the following examples that are intended as illustrative only since numerous modifications and variations therein will be apparent to those skilled in the art. Various embodiments of the disclosure are now described in detail. Referring to the drawings, like numbers, if any, indicate like components throughout the views. As used in the description herein and throughout the claims that follow, the meaning of "a", "an", and "the" includes plural reference unless the context clearly dictates otherwise. Also, as used in the description herein and throughout the claims that follow, the meaning of "in" includes "in" and "on" unless the context clearly dictates otherwise. Moreover, titles or subtitles may be used in the specification for the convenience of a reader, which shall have no influence on the scope of the present disclosure. Additionally, some terms used in this specification are more specifically defined below.

The terms used in this specification generally have their ordinary meanings in the art, within the context of the disclosure, and in the specific context where each term is used. Certain terms that are used to describe the disclosure are discussed below, or elsewhere in the specification, to provide additional guidance to the practitioner regarding the description of the disclosure. For convenience, certain terms may be highlighted, for example using italics and/or quotation marks. The use of highlighting has no influence on the scope and meaning of a term; the scope and meaning of a term is the same, in the same context, whether or not it is highlighted. It will be appreciated that same thing can be said in more than one way. Consequently, alternative language and synonyms may be used for any one or more of the terms discussed herein, nor is any special significance to be placed upon whether or not a term is elaborated or discussed herein. Synonyms for certain terms are provided. A recital of one or more synonyms does not exclude the use of other synonyms. The use of examples anywhere in this specification including examples of any terms discussed herein is illustrative only, and in no way limits the scope and meaning of the disclosure or of any exemplified term. Likewise, the disclosure is not limited to various embodiments given in this specification.

Unless otherwise defined, all technical and scientific terms used herein have the same meaning as commonly understood by one of ordinary skill in the art to which this disclosure pertains. In the case of conflict, the present document, including definitions will control.

As used herein, "around", "about" or "approximately" shall generally mean within 20 percent, preferably within 10 percent, and more preferably within 5 percent of a
given value or range. Numerical quantities given herein are approximate, meaning that the term "around", "about" or "approximately" can be inferred if not expressly stated.

As used herein, "plurality" means two or more.

As used herein, the terms "comprising," "including," "carrying," "having," "containing," "involving," and the like are to be understood to be open-ended, i.e., to mean including but not limited to.

As used herein, the phrase at least one of A, B, and C should be construed to mean a logical (A or B or C), using a non-exclusive logical OR. It should be understood that one or more steps within a method may be executed in different order (or concurrently) without altering the principles of the present disclosure.

As used herein, the term module/device may refer to, be part of, or include an Application Specific Integrated Circuit (ASIC); an electronic circuit; a combinational logic circuit; a field programmable gate array (FPGA); a processor (shared, dedicated, or group) that executes code; other suitable hardware components that provide the described functionality; or a combination of some or all of the above, such as in a system-on-chip. The term module/device may include memory (shared, dedicated, or group) that stores code executed by the processor.

The term code, as used above, may include software, firmware, and/or microcode, and may refer to programs, routines, functions, classes, and/or objects. The term shared, as used above, means that some or all code from multiple modules may be executed using a single (shared) processor. In addition, some or all code from multiple modules may be stored by a single (shared) memory. The term group, as used above, means that some or all code from a single module may be executed using a group of processors. In addition, some or all code from a single module may be stored using a group of memories.

The apparatuses and methods described herein may be implemented by one or more computer programs executed by one or more processors. The computer programs include processor-executable instructions that are stored on a non-transitory tangible computer readable medium. The computer programs may also include stored data. Nonlimiting examples of the non-transitory tangible computer readable medium are nonvolatile memory, magnetic storage, and optical storage.

The present disclosure will now be described more fully hereinafter with reference to the accompanying drawings, in which embodiments of the disclosure are shown. This disclosure may, however, be embodied in many different forms and should not be construed as limited to the embodiments set forth herein; rather, these embodiments are provided so that this disclosure will be thorough and complete, and will fully convey the scope of the disclosure to those skilled in the art. Like numbers refer to like elements throughout.

As described in the background, when a portrait is taken, the portrait may focus on a person such that the person in the portrait may appear very sharp and clear in the picture, while other objects such as buildings or trees in the background away from the person may appear soft and out of focus. However, when taking a picture or video of a large gathering such as a concert, or a meeting where there are many people, the photographer is presented with a dilemma: where to place the focus of the picture. Although a smaller aperture can increase the depth of the field, but it is impossible to take a picture with everything in focus. The photographer has to decide where to focus and then take the photo. Once the picture is taken, the depth of field in the picture is permanent and unalterable and the sharpness of anything outside the selected depth of field is forever lost. Therefore, all other elements in the photograph outside this depth of field will not be recorded in detail making it impossible for any other viewer of the photograph to see those afore mentioned portions of the picture in focus..

The present disclosure relates to a single camera dynamic imaging system 100 that takes a dynamic image of a visual scene. The dynamic image includes not only one picture where the photographer chooses to focus, but also multiple focused images of the visual scene, and each focused image is focused on objects at different focusing distances. Additional information of the visual scene is preserved and may be displayed. A dynamic image display device may be used to display the dynamic image. In one embodiment, the dynamic image display device may include a gaze detection device. The gaze detection device is a device for measuring eye positions and eye movement of a viewer. When the viewer moves his/her eyes towards a group of one or more objects, the gaze detection device detects the viewer's eyes are aimed at the group of one or more objects, a focused image of the dynamic image corresponding to the group of one or more objects is dynamically and interactively displayed on the dynamic image display device. In another embodiment, the dynamic image display device may include a touch screen input device or a mouse pointing device. When the viewer touches a group of one or more objects shown on the dynamic image display device, or uses the mouse to click the group of one or more objects shown on the dynamic image display device, a focused image of the dynamic image corresponding to the group of one or more objects is dynamically and interactively displayed on the dynamic image display device.

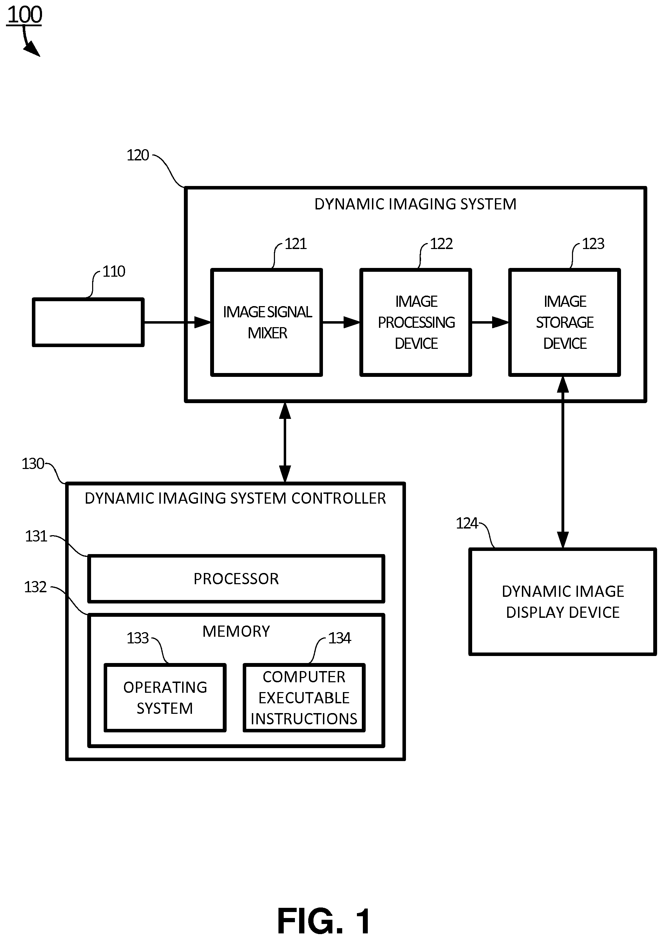

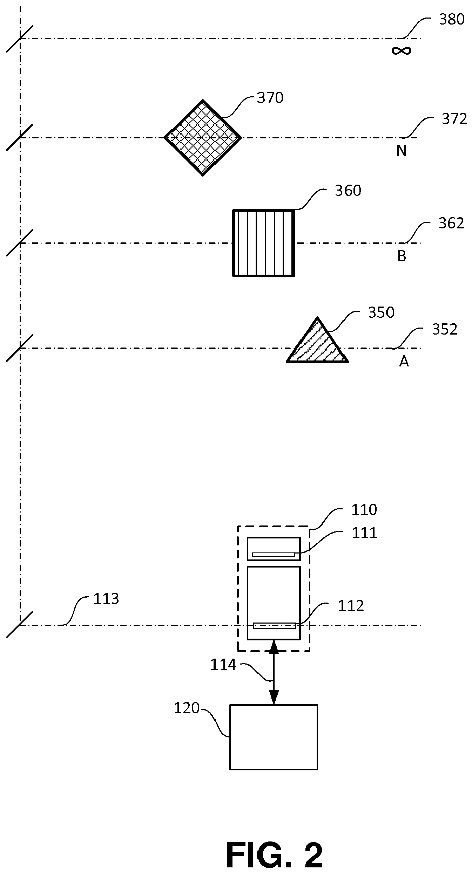

In one aspect, the present disclosure relates to a single camera dynamic imaging system 100 as shown in FIG. 1 and FIG. 2. In certain embodiments, the single camera dynamic imaging system 100 includes a camera 110, and a dynamic imaging system 120. The camera 110 includes a movable lens 111 to capture image signal of a set of focused images of multiple objects within a visual scene. The multiple objects within the visual scene may be divided into one or more groups of objects, and each group includes one or more objects within a predetermined distance range. Each focused image is focused at a group of one or more objects through the movable lens 111. The camera 110 includes a sensor 112 located in a sensor plane 113 to capture the image signal of the set of focused images, and an image signal output 114 to transmit the image signal of the set of focused images captured from the sensor 112 to the dynamic imaging system 120.

In certain embodiments, the dynamic imaging system 120 includes an image signal mixer 121, an image processing device 122, and an image storage device 123. The image signal mixer 121 receives the image signal of the set of focused images from the image signal output 114. The image processing device 122 processes the image signal of the set of focused images received by the image signal mixer 121 to form the dynamic image. The image storage device 123 stores the dynamic image processed by the image processing device 122.

In certain embodiments, the dynamic imaging system 120 includes a dynamic imaging system controller 130 for controlling the dynamic imaging system 120. The dynamic imaging system controller 130 has one or more processors 131. In one embodiment, the processors 131 may include a reduced instruction set computer (RISC) microprocessor. The processors 131 are coupled to a system memory 132 and various other components via a system bus (not shown in FIG. 1). In one embodiment, the system memory 132 may include a Read Only Memory (ROM) coupled to the processors 131 and may include a basic input/output system (BIOS), which controls certain basic functions of the dynamic imaging system controller 130.

In exemplary embodiments, the processors 131 may include a graphics processing unit (not shown in FIG. 1). The graphics processing unit is a specialized electronic circuit designed to manipulate and alter memory to accelerate the creation of images in a frame buffer intended for output to a display. In general, the graphics processing unit is very efficient at manipulating computer graphics and image processing, and has a highly parallel structure that makes it more effective than general-purpose CPUs for algorithms where processing of large blocks of data is done in parallel.

In certain embodiments, as configured in FIG. 1, the dynamic imaging system controller 130 includes processing capability in the form of the processors 131, storage capability including the system memory 132 and the image storage device 123, image input from the camera 110 and output capability to the dynamic image display device 124. In one embodiment, a portion of the system memory 132 may store one or more operating systems as well as one or more application programs to coordinate the functions of the various components of the dynamic imaging system controller 130 as shown in FIG. 1. The set of application programs, inclusive of certain utility programs, may also provide a graphical user interface to the user. A web browser is an application program and runs on the operating system. The operating system is operable to multitask, i.e., execute computing tasks in multiple threads, and thus may include, but not limited to, any of the following: MICROSOFT CORPORATION's "WINDOWS XP" or "WINDOWS NT", "WINDOWS Vista,", "WINDOWS 7," "WINDOWS 8," and "WINDOWS 10" operating systems, IBM's OS/2 WARP, APPLE's MACINTOSH OSX operating system, LINUX, UNIX, etc. The web browser may include one or more of: SAFARI, CHROME, FIREFOX, and INTERNET EXPLORER.

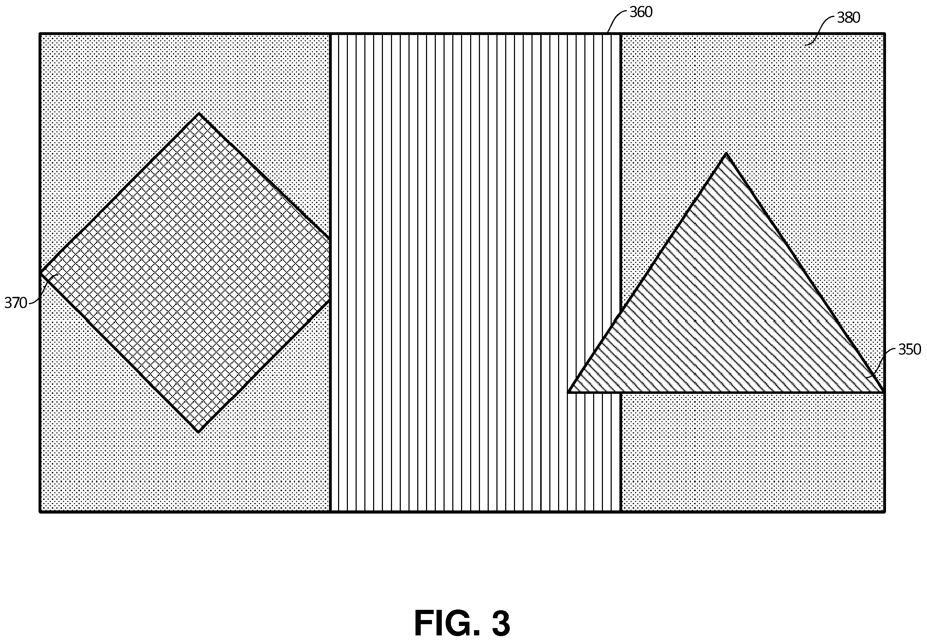

In one aspect, the present disclosure relates to a dynamic image of a visual scene as shown in FIG. 2. The visual scene may include many groups of objects, and each group may include one or more objects. In an exemplary embodiment, as shown in FIG. 2, there are three groups of objects. For the purpose of simplicity, each group contains one object. A first group includes a triangular shape 350 in diagonal line pattern. A second group includes a rectangular shape 360 in vertical line pattern. A third group includes a diamond shape 370 in a diagonal grid pattern. These three groups are arranged at different distances from the camera 110. Ever since photography was invented in the nineteenth century, a still image of the visual scene may look like an illustrative image as shown in FIG. 3. Due to the depth of the field of the camera lens, only one of the three groups of objects may be in focus as decided by a photographer. Other groups of objects may be out of focus. The decision regarding which group is in focus and which group is out of focus is decided by the photographer when the photographer takes the photo. For example, if the photographer focuses the first group of objects 350 when the photo was taken, the first group of objects 350 will be in focus and the second group of objects 360 and the third group of objects 370 will be out of focus. Once the photo is taken, information related to the focused image of one of the groups of objects is recorded, and information related to the other, out of focus groups of objects will be forever lost. When the photo is shown either as a printed picture, or displayed in a display device, a viewer can only see the focused image of the first group of objects 350, and will not be able to see the focused images of the second or third groups of objects 360 and 370. This is the shortcoming of conventional photography and this shortcoming remains in the field of photography ever since the photography was invented almost 200 years ago.

The dynamic image of the visual scene is designed to overcome the above mentioned shortcoming of conventional photography and provide additional information to the viewers so that when the viewer is viewing the display of the dynamic image, the viewer is provided with fully immersive and vivid focused images of any groups of objects of the visual scene. The viewer has total freedom to see focused images of any groups of objects in the visual scene, as if the viewer was the photographer, and the focal selection is no longer limited by the focus originally chosen by the photographer.

Referring now back to FIG. 2, an exemplary dynamic image capturing of the exemplary visual scene using the single camera dynamic imaging system is shown according to certain embodiments of the present disclosure. In certain embodiments, a dynamic image captured by the single camera dynamic imaging system 100 includes the set of focused images, and each focused image is associated with a corresponding focusing distance of the movable lens 111 on each of the one or more groups of one or more objects.

In certain embodiments, the single camera dynamic imaging system 100 includes the camera 110, and the dynamic imaging system 120. The camera 110 includes a movable lens 111 to capture image signal of a set of focused images of multiple objects within the visual scene. The multiple objects within the visual scene may be divided into one or more groups of objects, and each group includes one or more objects within a predetermined distance range. Each focused image is focused at a group of one or more objects through the movable lens 111. The camera 110 includes a sensor 112 located in a sensor plane 113 to capture the image signal of the set of focused images, and an image signal output 114 to transmit the image signal of the set of focused images captured from the sensor 112 to the dynamic imaging system 120.

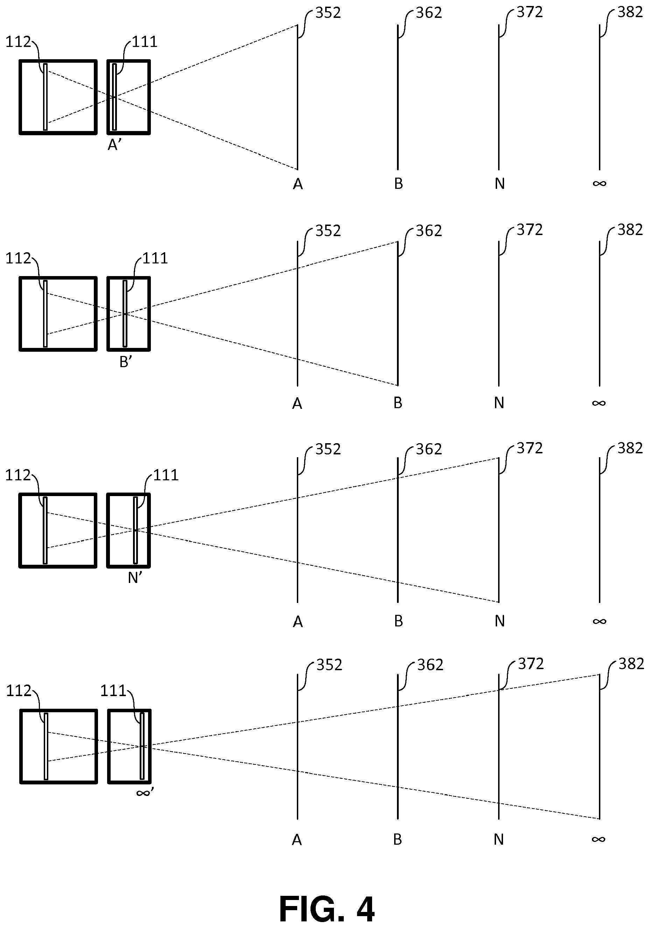

In one embodiment, the dynamic image captured by the single camera dynamic imaging system 100 includes four focused images: a first image focused on the first group of one or more objects 350 at a near focal distance 352, a second image focused on the second group of one or more objects 360 at a medium focal distance 362, a third image focused on the third group of one or more objects 370 at a far focal distance 370, and a fourth image focused on the background 380 either at a fixed distance or infinity (∞) of the visual scene. When a photographer takes the dynamic image of the visual scene, an auto-focus function of the movable lens 111 takes following actions to capture the dynamic image as shown in FIG. 4 within an image capturing cycle:
adjusting the focus of the moveable lens 111 to a position A' to focus on the first group of objects 350 at a focal distance 352 and capturing the first focused image of the first group of objects 350 by the sensor 112;
adjusting the focus of the moveable lens 111 to a position B' to focus on the second group of objects 360 at a focal distance 362 and capturing the second focused image of the second group of objects 360 by the sensor 112;
adjusting the focus of the moveable lens 111 to a position N' to focus on the third group of objects 370 at a focal distance 372 and capturing the third focused image of the third group of objects 370 by the sensor 112; and
adjusting the focus of the moveable lens 111 to a position ∞' to focus on the background 380 of the visual scene at a focal distance 382 and capturing the fourth focused image of the background 380 of the visual scene.

The information captured for the set of focused images is much more than a focused image of conventional photo. It includes one focused image for each of the groups of the objects of the visual scene. For example, according to the exemplary embodiment as shown in FIG. 2, the captured set of focused images includes the first focused image of the first group of objects 350, the second focused image of the second group of objects 360; the third focused image of the third group of objects 370, and the fourth focused image of the background 380 of the visual scene. That is at least four focused images, instead of just one. In certain embodiments, the captured set of focused images is transmitted to the dynamic imaging system 120 to be processed and stored.

In certain embodiments, these four focused images include certain information that is redundant. For example, only the portion of the first group of objects 350 on the first focused image, the portion of the second group of objects 360 on the second focused image, the portion of the third group of objects 370 on the third focused image, and the portion of the background 380 on the fourth focused image are important. Everywhere else on the first focused image, the second focused image, the third focused image, and the fourth focused image are not as important because it is out of focus. In certain embodiments, the image processing device 122 may be used to reduce the image file data size by removing the redundant and out of focus portions of the first focused image, the second focused image, the third focused image, and the fourth focused image.

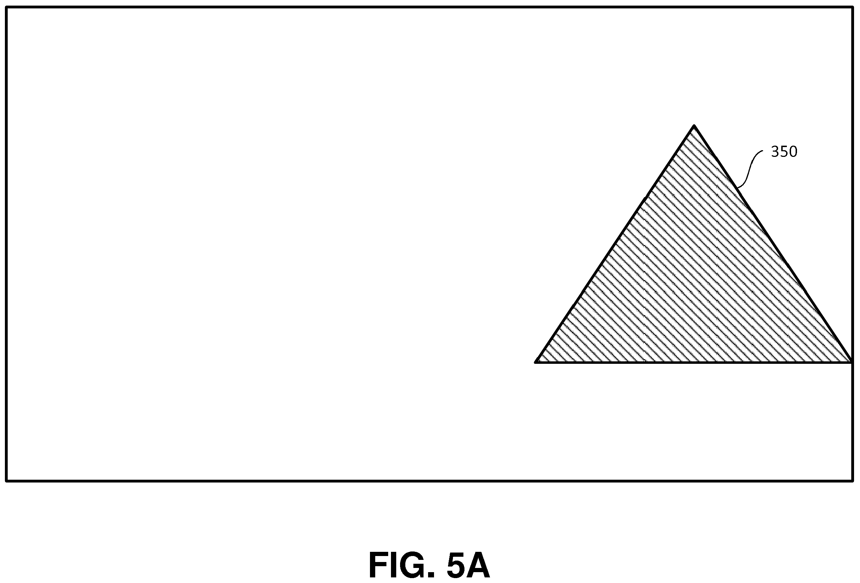

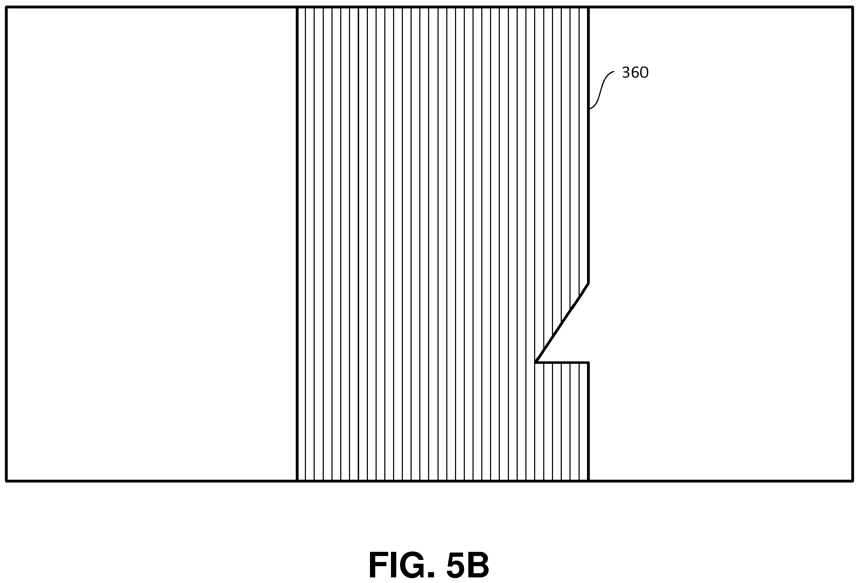

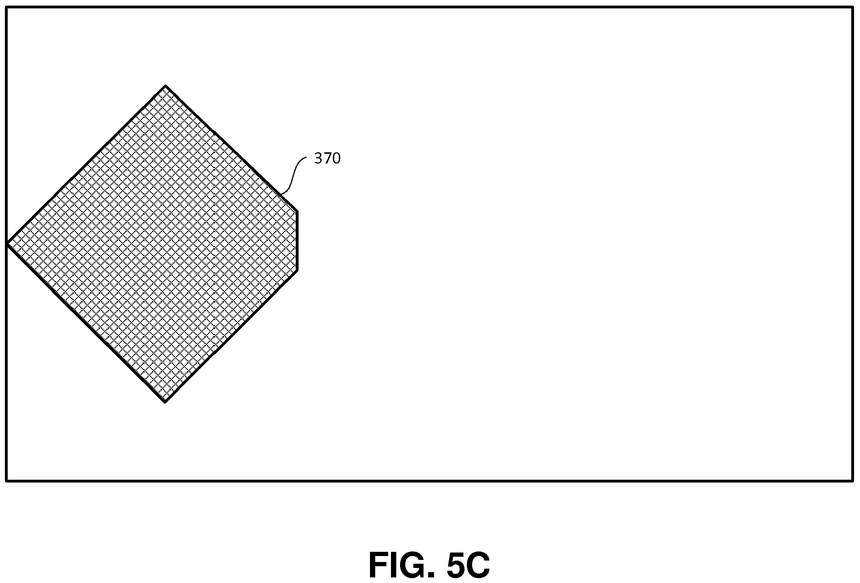

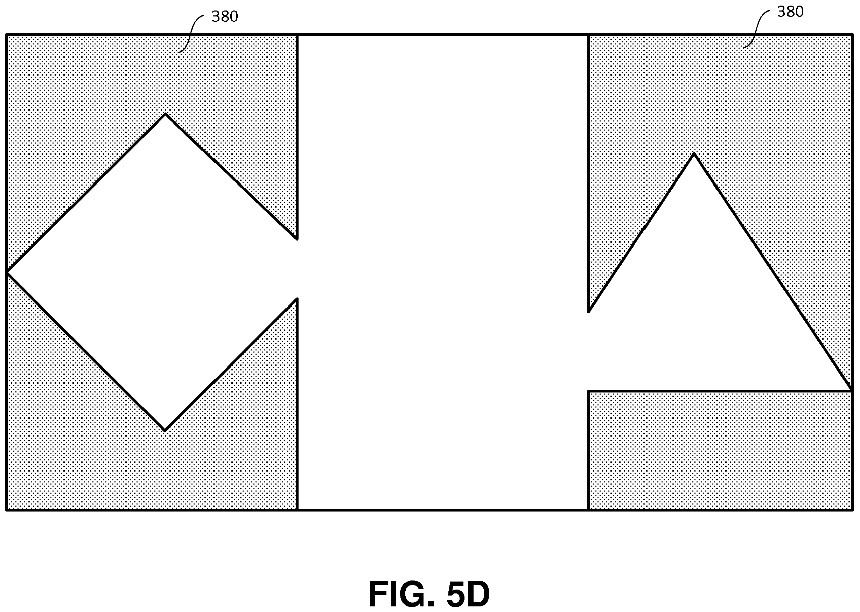

In certain embodiments, a boundary detection software may be used to perform following functions:
detecting the border of the first group of objects 350 of the first focused image, and removing the image data that is not within the border of the first group of objects 350 of the first focused image, as shown in FIG. 5A;
detecting the border of the second group of objects 360 of the second focused image, and removing the image data that is not within the border of the second group of objects 360 of the second focused image, as shown in FIG. 5B;
detecting the border of the third group of objects 370 of the third focused image, and removing the image data that is not within the border of the third group of objects 370 of the third focused image, as shown in FIG. 5C; and
detecting the border of the background 380 of the visual scene of the fourth focused image, and removing the image data that is not within the border of the background 380 of the visual scene of the fourth focused image, as shown in FIG. 5D.

In certain embodiments, the camera 110 uses an auto-focus function to continuously evaluate, focus and track each of the focusing distances to the one or more groups of one or more objects. In one embodiment, the camera 110 evaluates, focuses and tracks each of the focusing distances to the one or more groups of one or more objects through a principle lens system. In another embodiment, the camera 110 evaluates, focuses and tracks each of the focusing distances to the one or more groups of one or more objects through a second lens system sharing a same optical path of the principle lens system. In yet another embodiment, the camera 110 evaluates, focuses and tracks each of the focusing distances to the one or more groups of one or more objects through an ancillary optical path.

In certain embodiments, when each of the one or more groups of one or more objects is detected to be in focus by the sensor 112, the sensor 112 captures the image signal of the set of focused images respectively, records related data of the set of focused images captured, and transmits the image signal of the set of focused images captured and their related data to the image storage device 123. In certain embodiments, the related data of the set of focused images may include: a total number of focused images in the set of focused images, a time when the set of focused images is captured, one or more optical conditions when the set of focused images is captured, GPS location coordinates where the set of focused images is captured, data needed to determine focusing distances to each of the one or more groups of one or more objects within the visual scene for each focused image, and data needed to determine the boundaries of each of the one or more groups of one or more objects within the visual scene for each focused image.

In certain embodiments, the set of focused images and their related data are stored in the image storage device 123 of the dynamic imaging system 120.

In certain embodiments, the data needed to determine focusing distances to each of the one or more groups of one or more objects within the visual scene for each focused image may be used to assist the camera 110 to reduce the time needed to reacquire focus on each of the one or more groups of one or more objects during an image capturing cycle. The data needed to determine the boundaries of each of the one or more groups of one or more objects may be used to assist the camera 110 and the image processing device 122 to reduce the image file size of the set of focused images.

In certain embodiments, the dynamic imaging system 120 may include a dynamic image display device 124. The dynamic image display device 124 displays the dynamic image. In one embodiment, the dynamic image display device 124 includes a gaze detection device. The gaze detection device is a device for measuring eye positions and eye movement of a viewer. When the viewer moves his/her eyes towards a group of one or more objects, and the gaze detection device detects that the viewer's eyes are aimed at the group of one or more objects, a focused image of the dynamic image corresponding to the group of one or more objects is dynamically and interactively displayed on the dynamic image display device 124. In another embodiment, the dynamic image display device 124 may include a touch screen input device or a mouse pointing device. When the viewer touches a group of one or more objects on the screen, or uses the mouse to click the group of one or more objects on the screen, a focused image of the dynamic image corresponding to the group of one or more objects is dynamically and interactively displayed on the dynamic image display device 124.

In certain embodiments, the dynamic image display device 124 may include monitors, television sets, flat panel displays, touch screen displays, computer monitors, laptop computer screens, tablet display screens, digital picture frames, smartphone display screens, as well as any other digital image display device. The dynamic image display device 124 may include a gaze detection device to detect the viewer's eye movement, a touch screen or a mouse to receive viewer's input.

In certain embodiments, when the dynamic image display device 124 does not include the additional equipment as discussed above, the dynamic image may be displayed with each of set of focused images overlaid, where each focused image having the redundant and out of focus portions removed from the set of focused images.

In certain embodiments, the present disclosure relates to a dynamic video recording system having the single camera dynamic imaging system 100.

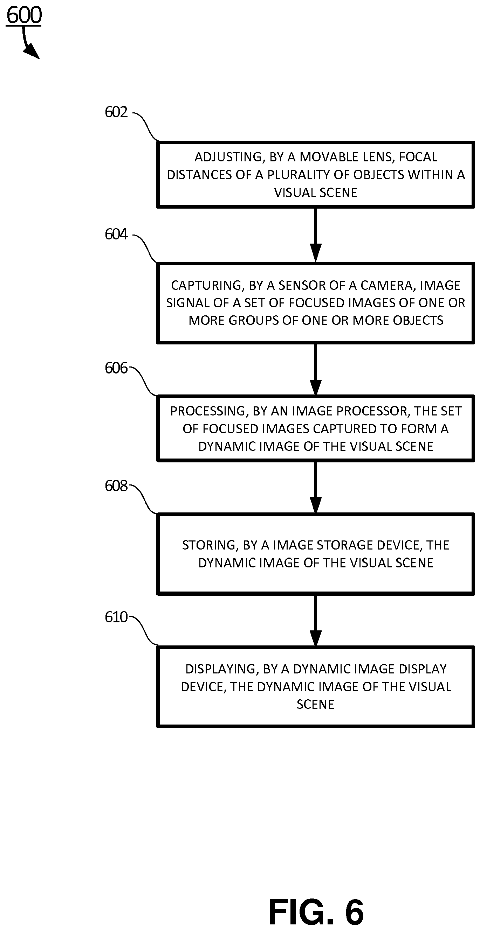

In another aspect, the present disclosure relates to a method 600 of capturing a dynamic image using a single camera dynamic imaging system 100 as shown in FIG. 6. In certain embodiments, the method includes one or more of following operations:

At block 602, the dynamic imaging system 120 of the single camera dynamic imaging system 100 adjusts the movable lens 111 of the camera 110 of the single camera dynamic imaging system 100 to focus on multiple objects within a visual scene. The multiple objects within the visual scene may be divided into one or more groups of objects, and each group includes one or more objects within a predetermined distance range. Each focused image is focused at a group of one or more objects through the movable lens 111.

At block 604, the dynamic imaging system 120 of the single camera dynamic imaging system 100 captures image signal of a set of focused images of the multiple objects by a sensor 112 of the camera 110 when each of the one or more groups of one or more objects is detected to be in focus through the movable lens 111.

In one embodiment, the dynamic image captured by the single camera dynamic imaging system 100 includes four focused images: a first image focused on the first group of one or more objects 350 at a near focal distance 352, a second image focused on the second group of one or more objects 360 at a medium focal distance 362, a third image focused on the third group of one or more objects 370 at a far focal distance 370, and a fourth image focused on the background 380 either at fixed distance or infinity (∞) of the visual scene. When a photographer takes the dynamic image of the visual scene, the auto-focus function of the movable lens 111 takes following actions to capture the dynamic image as shown in FIG. 4 within an image capturing cycle:
adjusting the focus of the moveable lens 111 to a position A' to focus on the first group of objects 350 at a focal distance 352 and capturing the first focused image of the first group of objects 350 by the sensor 112;
adjusting the focus of the moveable lens 111 to a position B' to focus on the second group of objects 360 at a focal distance 362 and capturing the second focused image of the second group of objects 360 by the sensor 112;
adjusting the focus of the moveable lens 111 to a position N' to focus on the third group of objects 370 at a focal distance 372 and capturing the third focused image of the third group of objects 370 by the sensor 112; and
adjusting the focus of the moveable lens 111 to a position ∞' to focus on the background 380 of the visual scene at a focal distance 382 and capturing the fourth focused image of the background 380 of the visual scene.

The information captured for the set of focused images is much more than a focused image of conventional photo. It includes one focused image for each of the groups of the objects of the visual scene. For example, according to the exemplary embodiment as shown in FIG. 2, the captured set of focused images includes the first focused image of the first group of objects 350, the second focused image of the second group of objects 360; the third focused image of the third group of objects 370, and the fourth focused image of the background 380 of the visual scene. That is at least four focused images, instead of just one. In certain embodiments, the captured set of focused images is transmitted to the dynamic imaging system 120 to be processed and stored.

In certain embodiments, when each of the one or more groups of one or more objects is detected to be in focus by the sensor 112, the sensor 112 captures the image signal of the set of focused images respectively, records related data of the set of focused images captured, and transmits the image signal of the set of focused images captured and their related data to the image storage device 123. In certain embodiments, the related data of the set of focused images may include: a total number of focused images in the set of focused images, a time when the set of focused images is captured, one or more optical conditions when the set of focused images is captured, GPS location coordinates where the set of focused images is captured, data needed to determine focusing distances to each of the one or more groups of one or more objects within the visual scene for each focused image, and data needed to determine the boundaries of each of the one or more groups of one or more objects within the visual scene for each focused image.

At block 606, the image signal mixer 121 of a dynamic imaging system 120 of the single camera dynamic imaging system 100 receives the image signal of the set of focused images captured from the sensor 112 through the image signal output 114, and the related data of the set of focused images, the image processing device 122 of the dynamic imaging system 120 of the single camera dynamic imaging system 100 processes the image signal of the set of focused images received by the image signal mixer 121 to form the dynamic image.

At block 608, the image storage device 123 of the dynamic imaging system 120 of the single camera dynamic imaging system 100 stores the dynamic image processed by the image processing device 122. The information of the dynamic image stored in the image storage device 123 includes the set of focused images and the related data of the set of focused images.

At block 610, the method may also include displaying the dynamic image on a dynamic image display device 124. In one embodiment, the dynamic image display device 124 may include a gaze detection device. The gaze detection device is a device for measuring eye positions and eye movement of a viewer. When a viewer moves his/her eyes towards a group of one or more objects, and the gaze detection device detects that the viewer's eyes are aimed at the group of one or more objects, a focused image of the dynamic image corresponding to the group of one or more objects is dynamically and interactively displayed on the dynamic image display device 124. In another embodiment, the dynamic image display device 124 may include a touch screen input device or a mouse pointing device. When the viewer touches a group of one or more objects on the screen, or uses the mouse to click the group of one or more objects on the screen, a focused image of the dynamic image corresponding to the group of one or more objects is dynamically and interactively displayed on the dynamic image display device 124.

In certain embodiments, the dynamic image display device 124 may include monitors, television sets, flat panel displays, touch screen displays, computer monitors, laptop computer screens, tablet display screens, digital picture frames, smartphone display screens, as well as any other digital image display device. The dynamic image display device 124 may include a gaze detection device to detect the viewer's eye movement, a touch screen or a mouse to receive viewer's input.

In certain embodiments, when the dynamic image display device 124 does not include the additional equipment as discussed above, the dynamic image may be displayed with each of set of focused images overlaid, where each focused image having the redundant and out of focus portions removed from the set of focused images.

In certain embodiments, the method includes: capturing a first focused image focusing on a first group of one or more objects within a near focal distance, capturing a second focused image focusing on a second group of one or more objects within a medium focal distance, and capturing a third focused image focusing on a third group of one or more objects within a far focal distance. In one embodiment, the near focal distance may be defined as within a range less than about 30% of a distance between the camera 110 and infinity of the visual scene, the medium focal distance may be defined as within a range about 30% to 60% of the distance between the camera 110 and the infinity of the visual scene, and the far focal distance may be defined as within a range greater than about 60% of the distance between the camera 110 and the infinity of the visual scene.

In certain embodiments, the method also includes evaluating, by the movable lens 111, the focusing distances to the one or more groups of one or more objects in a continuous cycle. In one embodiment, evaluating includes evaluating, focusing and tracking, by the camera 110 through the movable lens 111, each of the focusing distances to the one or more groups of one or more objects through a principle lens system. In another embodiment, evaluating includes evaluating, focusing and tracking, by the camera 110 through the movable lens 111, each of the focusing distances to the one or more groups of one or more objects through a second lens system sharing an optical path of the movable lens 111. In yet another embodiment, evaluating includes evaluating, focusing and tracking, by the camera 110 through the movable lens 111, each of the focusing distances to the one or more groups of one or more objects through an ancillary optical path.

In certain embodiments, the method may also include: recording related data of the set of focused images. In one embodiment, the related data of the set of focused images includes: a total number of focused images in the set of focused images, a time the set of focused images is captured, one or more optical conditions when the set of focused images is captured, GPS location coordinates where the set of focused images is captured, data needed to determine focusing distances to each of the one or more groups of one or more objects within the visual scene for each focused image, and data needed to determine the boundaries of each of the one or more groups of one or more objects within the visual scene for each focused image.

In certain embodiments, the method may also include: assisting the camera 110 in reducing the time needed to reacquire focus on the object during an image capturing cycle using the data needed to determine focusing distances to each of the one or more groups of one or more objects, and assisting the camera 110 and the image processing device 122 to reduce the image file size of the set of focused images using the data needed to determine the boundaries of each of the one or more groups of one or more objects.

In yet another aspect, the present disclosure relates to a computer program product operable on a dynamic imaging system controller 130 for capturing a dynamic image. The dynamic imaging system controller 130 includes a processor 131 and a non-transitory computer memory 132 readable by the dynamic imaging system controller 130 configured to store a dynamic imaging system control program for execution by the processor for performing a method of capturing the dynamic image of a visual scene.

In certain embodiments, the method includes: adjusting, by a movable lens 111 of a camera 110 of the single camera dynamic imaging system 100, focusing distances to multiple objects within a visual scene, and generating and capturing, by a sensor 112 of the camera 110, image signal of a set of focused images of the multiple objects when each of the one or more groups of one or more objects is detected to be in focus through the movable lens 111. The multiple objects include one or more groups of objects. Each group includes one or more objects within a predetermined distance range. Each of the focusing distances of the camera 110 focuses on a corresponding group of objects.

In certain embodiments, the method further includes: receiving, at an image signal mixer 121 of a dynamic imaging system 120, the image signal of the set of focused images from the sensor 112 through an image signal output 114, processing, by an image processing device 122 of the dynamic imaging system 120, the image signal of the set of focused images received by the image signal mixer 121 to form the dynamic image, and storing, by an image storage device 123 of the dynamic imaging system 120, the dynamic image processed by the image processing device 122. The method may also include displaying the dynamic image on a dynamic image display device 124. When a viewer moves his/her eyes towards a group of one or more objects and the eye movement is detected by a gaze detection device on the dynamic image display device, or when the viewer touches using a touch screen input device or points using a mouse on the group of one or more objects shown on the dynamic image display device, a focused image of the dynamic image corresponding to the group of one or more objects looked at, touched on, or pointed at is displayed dynamically and interactively on the dynamic image display device.

In certain embodiments, the dynamic image captured by the single camera dynamic imaging system 100 includes the set of focused images captured, processed and stored by the dynamic imaging system 120, and each of the focused images is associated with a corresponding focusing distance of the movable lens 111 to each of the one or more groups of one or more objects.

In certain embodiments, the method includes: capturing a first focused image focusing on a first group of one or more objects within a near focal depth, capturing a second focused image focusing on a second group of one or more objects within a medium focal depth, and capturing a third focused image focusing on a third group of one or more objects within a far focal depth. In one embodiment, the near focal depth may be defined as within a range less than about 30% of a distance between the camera 110 and infinity of the visual scene, the medium focal depth may be defined as within a range about 30% to 60% of the distance between the camera 110 and the infinity of the visual scene, and the far focal depth may be defined as within a range greater than about 60% of the distance between the camera 110 and the infinity of the visual scene.

In certain embodiments, the dynamic imaging system 120 includes: the image signal mixer 121, the image processing device 122, the image storage device 123, and a dynamic image display device 124. The image signal mixer 121 receives the image signal of the set of focused images from the camera 110 through the image signal output 114. The image processing device 122 processes the image signal of the set of focused images received from the image signal mixer 121 to form the dynamic image. The image storage device 123 stores the dynamic image processed by image processing device 122. The dynamic image display device 124 displays the dynamic image. When the viewer moves his/her eyes towards a group of one or more objects, a focused image of the dynamic image corresponding to the group of one or more objects is displayed dynamically and interactively on the image display device 124.

In certain embodiments, the method also includes evaluating, by the movable lens 111, the focusing distances to the one or more groups of one or more objects in a continuous cycle. In one embodiment, evaluating includes evaluating, focusing and tracking, by the camera 110 through the movable lens 111, each of the focusing distances to the one or more groups of one or more objects through a principle lens system. In another embodiment, evaluating includes evaluating, focusing and tracking, by the camera 110 through the movable lens 111, each of the focusing distances to the one or more groups of one or more objects through a second lens system sharing an optical path of the movable lens 111. In yet another embodiment, evaluating includes evaluating, focusing and tracking, by the camera 110 through the movable lens 111, each of the focusing distances to the one or more groups of one or more objects through an ancillary optical path.

In certain embodiments, the method may also include: recording related data of the set of focused images. In one embodiment, the related data of the set of focused images includes: a total number of focused images in the set of focused images, a time the set of focused images is captured, one or more optical conditions when the set of focused images is captured, GPS location coordinates where the set of focused images is captured, data needed to determine focusing distances to each of the one or more groups of one or more objects within the visual scene for each focused image, and data needed to determine the boundaries of each of the one or more groups of one or more objects within the visual scene for each focused image.

In certain embodiments, the method may also include: assisting the camera 110 in reducing the time needed to reacquire focus on the object during an image capturing cycle using the data needed to determine focusing distances to each of the one or more groups of one or more objects, and assisting the camera 110 and the image processing device 122 to reduce the image size of the set of focused images using the data needed to determine the boundaries of each of the one or more groups of one or more objects.

The foregoing description of the exemplary embodiments of the disclosure has been presented only for the purposes of illustration and description and is not intended to be exhaustive or to limit the disclosure to the precise forms disclosed. Many modifications and variations are possible in light of the above teaching.

The embodiments were chosen and described in order to explain the principles of the disclosure and their practical application so as to enable others skilled in the art to utilize the disclosure and various embodiments and with various modifications as are suited to the particular use contemplated. Alternative embodiments will become apparent to those skilled in the art to which the present disclosure pertains without departing from its spirit and scope. Accordingly, the scope of the present disclosure is defined by the appended claims rather than the foregoing description and the exemplary embodiments described therein.

Aspects of present disclosure relates to single camera dynamic imaging systems and methods of capturing dynamic images. The single camera dynamic imaging system includes a camera, and a dynamic imaging system. The camera includes a movable lens to capture image signal of a set of focused images of multiple objects within a visual scene. The multiple objects may be divided into one or more groups of objects, and each group includes one or more objects within a predetermined distance range. Each of the focused images is focused at a group of one or more objects through the movable lens. The camera includes a sensor to capture image signal of the set of focused images, and an image signal output to transmit the image signal to the dynamic imaging system. The dynamic imaging system receives, processes and stores the image signal of the set of focused images captured by the camera.

## Claims

1. A single camera dynamic imaging system, comprising:
a camera having a movable lens to capture image signal of a set of focused images of a plurality of objects within a visual scene, wherein the plurality of objects comprises one or more groups of objects, each group having one or more objects within a predetermined distance range, each focused image is focused at a group of one or more objects through the movable lens; and
a dynamic imaging system to receive, process and store the image signal of the set of focused images captured by the camera,
wherein the camera comprises a sensor to capture the image signal of the set of focused images, and an image signal output to transmit the image signal of the set of focused images captured from the sensor to the dynamic imaging system.

2. The single camera dynamic imaging system of claim 1, wherein a dynamic image captured by the single camera dynamic imaging system comprises the set of focused images, wherein each focused image is associated with a corresponding focusing distance of the movable lens on each of the one or more groups of one or more objects.

3. The single camera dynamic imaging system of claim 2, wherein the dynamic image captured by the single camera dynamic imaging system comprises:
a first focused image focusing on a first group of one or more objects within a near focal distance, wherein the near focal distance is within a range less than about 30% of a distance between the camera to infinity of the visual scene;
a second focused image focusing on a second group of one or more objects within a medium focal distance, wherein the medium focal distance is within a range about 30% to 60% of the distance between the camera to the infinity of the visual scene; and
a third focused image focusing on a third group of one or more objects within a far focal distance, wherein the far focal distance is within a range greater than 60% of the distance between the camera to the infinity of the visual scene.

4. The single camera dynamic imaging system of one of claims 1 to 3,
wherein the dynamic imaging system comprises:
an image signal mixer to receive the image signal of the set of focused images from the image signal output;
an image processing device to process the image signal of the set of focused images received by the image signal mixer to form the dynamic image;
an image storage device to store the dynamic image processed by the image processing device; and
a dynamic image display device to display the dynamic image, wherein when a viewer moves his/her eyes towards a group of one or more objects and the eye movement is detected by a gaze detection device on the dynamic image display device, or when the viewer touches using a touch screen input device or points using a mouse on the group of one or more objects shown on the dynamic image display device, a focused image of the dynamic image corresponding to the group of one or more objects is displayed dynamically and interactively on the dynamic image display device;
wherein the camera preferably uses an auto-focus function to continuously evaluate, focus and track each of the focusing distances to the one or more groups of one or more objects.

5. The single camera dynamic imaging system of claim 4, wherein
the camera evaluates, focuses and tracks focusing distances to each of the one or more groups of one or more objects through a principle lens system;
the camera evaluates, focuses and tracks focusing distances to each of the one or more groups of one or more objects through a second lens system sharing the same optical path of the principle lens system; and
the camera evaluates, focuses and tracks focusing distances to each of the one or more groups of one or more objects through an ancillary optical path.

6. The single camera dynamic imaging system of claim 4 or 5, wherein when each of the one or more groups of one or more objects is detected to be in focus by the sensor, the sensor captures the image signal of each focused image respectively, records related data of the set of focused images captured, and transmits the image signal of the set of focused images captured and their related data to the image storage device;
wherein the related data of the set of focused images preferably comprises:
a total number of focused images in the set of focused images;
a time when the set of focused images is captured;
one or more optical conditions when the set of focused images is captured;
GPS location coordinates where the set of focused images is captured;
data needed to determine focusing distances to each of the one or more groups of one or more objects within the visual scene for each focused image; and
data needed to determine the boundaries of each of the one or more groups of one or more objects within the visual scene for each focused image.

7. The single camera dynamic imaging system of claim 6,
wherein the data needed to determine focusing distances to each of the one or more groups of one or more objects within the visual scene for each focused image assists the camera to reduce the time needed to reacquire focus on each of the one or more groups of one or more objects during an image capturing cycle;
or/and
wherein the data needed to determine the boundaries of each of the one or more groups of one or more objects assists the camera and the image processing device to reduce the image file size of the set of focused images.

8. A dynamic video recording system comprising the single camera dynamic imaging system of one of claims 1 to 7.

9. A method of capturing a dynamic image using a single camera dynamic imaging system, comprising:
adjusting, by a movable lens of a camera of the single camera dynamic imaging system, focusing distances to a plurality of objects within a visual scene, wherein the plurality of objects comprises one or more groups of objects, each group having one or more objects within a predetermined distance range;
capturing, by a sensor of the camera, image signal of a set of focused images of the plurality of objects when each of the one or more groups of one or more objects is detected to be in focus through the movable lens;
receiving, at an image signal mixer of a dynamic imaging system, image signal of the set of focused images from the sensor through an image signal output;
processing, by an image processing device of the dynamic imaging system, the image signal of the set of focused images received by the image signal mixer to form the dynamic image; and
storing, by an image storage device of the dynamic imaging system, the dynamic image processed by the image processing device,
wherein the dynamic image comprises the set of focused images captured, processed and stored, wherein each focused image is associated with a corresponding focusing distance to each of the one or more groups of one or more objects.

10. The method of claim 9, further comprising:
displaying, by a dynamic image display device, the dynamic image, wherein when a viewer moves his/her eyes towards a group of one or more objects and the eye movement is detected by a gaze detection device on the dynamic image display device, or when the viewer touches using a touch screen input device or points using a mouse on the group of one or more objects shown on the dynamic image display device, a focused image of the dynamic image corresponding to the group of one or more objects is displayed dynamically and interactively on the dynamic image display device.

11. The method of claim 9 or 10, wherein capturing comprising:
capturing a first focused image focusing on a first group of one or more objects within a near focal distance, wherein the near focal distance is within a range less than about 30% of a distance between the camera to infinity of the visual scene;
capturing a second focused image focusing on a second group of one or more objects within a medium focal distance, wherein the medium focal distance is within a range about 30% to 60% of the distance between the camera to the infinity of the visual scene; and
capturing a third focused image focusing on a third group of one or more objects within a far focal distance, wherein the far focal distance is within a range greater than 60% of the distance between the camera to the infinity of the visual scene.

12. The method of one of claims 9 to 11, wherein the dynamic imaging system comprises:
the image signal mixer to receive the image signal of the set of focused images from the camera through the image signal output;
the image processing device to process the image signal of the set of focused images received from the image signal mixer to form the dynamic image;
the image storage device to store the dynamic image processed by image processing device; and
the dynamic image display device to display the dynamic image, wherein when a viewer moves his/her eyes towards a group of one or more objects and the eye movement is detected by a gaze detection device on the dynamic image display device, or when the viewer touches using a touch screen input device or points using a mouse on the group of one or more objects shown on the dynamic image display device, a focused image of the dynamic image corresponding to the group of one or more objects is displayed dynamically and interactively on the dynamic image display device.

13. The method of one of claims 9 to 12, further comprising:
evaluating, by the movable lens, the focusing distances to the one or more groups of one or more objects in a continuous cycle;
wherein evaluating preferably comprises:
evaluating, focusing and tracking, by the camera through the movable lens, each of the focusing distances to the one or more groups of one or more objects through a principle lens system;
evaluating, focusing and tracking, by the camera through the movable lens, each of the focusing distances of the one or more groups of one or more objects through a second lens system sharing an optical path of the movable lens; and
evaluating, focusing and tracking, by the camera through the movable lens, each of the focusing distances of the one or more groups of one or more objects through an ancillary optical path.

14. The method of one of claims 9 to 13, further comprising:
recording related data of the set of focused images, wherein the related data of the set of focused images comprises:
a total number of focused images in the set of focused images;
a time the set of focused images is captured;
one or more optical conditions when the set of focused images is captured;
GPS location coordinates where the set of focused images is captured;
data needed to determine focusing distances to each of the one or more groups of one or more objects within the visual scene for each focused image; and
data needed to determine the boundaries of each of the one or more groups of one or more objects within the visual scene for each focused image.

15. The method of claim 14,
further comprising:
assisting the camera in reducing the time needed to reacquire focus on the object during an image capturing cycle using the data needed to determine focusing distances to each of the one or more groups of one or more objects;
or/and
further comprising:
assisting the camera and the image processing device to reduce the image file size of the set of focused images using the data needed to determine the boundaries of each of the one or more groups of one or more objects.
